# EUROPÄISCHE PATENTSCHRIFT

(11) **EP 0 525 288 B1**
(45) Veröffentlichungstag und Bekanntmachung des Hinweises auf die Patenterteilung: **06.12.1995**
(21) Anmeldenummer: 92103671.1
(22) Anmeldetag: 04.03.1992
(51) Int. Cl.: F16J 15/32

(54) **Kassettendichtung**
Cartridge sealing
Joint en cartouche

(30) Priorität: 30.07.1991 DE 4125183
(43) Veröffentlichungstag der Anmeldung: 03.02.1993
(73) Patentinhaber: Firma Carl Freudenberg, 69469 Weinheim (DE)
(72) Erfinder: Johnston, David Ernest, Dr., W-6940 Weinheim (DE)

(56) Entgegenhaltungen:
- EP-A- 0 418 473
- GB-A- 881 607
- GB-A- 922 642
- US-A- 3 275 333

## Beschreibung

Die Erfindung betrifft eine Kassettendichtung zur Abdichtung des Spaltes zwischen einer Bohrung und einer Welle, umfassend einen auf der Welle festgelegten Innenring mit einer radial nach außen geöffneten Nut, einen in der Bohrung festgelegten Außenring mit einem in die Nut eingreifenden, flanschartig ausgebildeten Radialvorsprung, wobei der Innenring mit in axialer Richtung einander zugewandten Stirnflächen versehen ist, die die Nut in axialer Richtung begrenzen und eine im Bereich des Innenumfanges an dem Radialvorsprung festgelegte Dichtlippe aus polymerem Werkstoff, wobei zumindest der Innenring aus einem plastisch verformten Blech besteht und wobei der Innenring einstückig ausgebildet und im Bereich von beiden axialen Enden mit durch eine plastische Umformung erzeugten, radial nach außen vorstehenden Ringvorsprüngen versehen ist.

Eine solche Kassettendichtung ist aus der EP-A-418 473 bekannt. Die Kassettendichtung ist zwischen einem feststehenden und einem rotierenden Teil angeordnet, wobei ein an dem feststehenden Teil befestigter metallischer Ölrückhaltering vorgesehen ist und ein an dem rotierenden Teil befestigter Führungsring sowie eine elastische ringförmige Öldichtung, die an einem ersten Bereich des Ölrückhalterings befestigt ist und dichtend mit dem Führungsring in gleitendem Eingriff steht. Eine mit dem Führungsring drehfest verbundene Lippendichtung berührt den Ölrückhaltering dichtend, wobei ein am Führungsring drehfest festgelegtes und mit dem Ölrückhaltering in gleitendem Eingriff stehendes Abstandsteil vorgesehen ist, das zwischen dem Ölrückhaltering und dem Führungsring angeordnet ist und einen bestimmten Abstand zwischen beiden Ringen aufrechterhält. Das Abstandsteil ist reibungsbehaftet zwischen den Ringen angeordnet, wobei die entstehende Reibungswärme über den Ölrückhaltering zum feststehenden Teil abgeleitet werden soll.

Eine weitere Vorrichtung ist aus der GB 881,607 bekannt. Danach ist eine Kassettendichtung bekannt, die vergleichsweise kompliziert gestaltete Innen- und Außenringe aufweist, die ineinander festgelegt und zur Vereinfachung der Montage mit Anschlageinrichtungen versehen sind. Diese Anschlageinrichtungen bestehen aus gummielastischem Werkstoff und werden während der bestimmungsgemäßen Verwendung im laufe der Zeit durch die Relativbewegung zwischen dem Innen- und dem Außenring entfernt. Die Gebrauchseigenschaften, insbesondere die Rückförderwirkung des abzudichtenden Mediums in Richtung des abzudichtenden Raumes, sind bei der vorbekannten Kassettendichtung wenig befriedigen.

Der Erfindung liegt die Aufgabe zugrunde, eine Kassettendichtung der eingangs genannten Art derart weiterzuentwickeln, daß sich ein erheblich vereinfachter Aufbau und eine vereinfachte Montage der Kassettendichtung ergeben und diese aus weniger ineinander festzulegenden Einzelteilen besteht, was in wirtschaftlicher Hinsicht besonders vorteilhaft ist. Des weiteren soll die Rückförderwirkung des abzudichtenden Mediums zurück in den abzudichtenden Raum verbessert werden was insgesamt eine Verbesserung der Abdichtung bedingt.

Diese Aufgabe wird mit den kennzeichnenden Merkmalen von Patentanspruch 1 gelöst. Auf vorteilhafte Ausgestaltungen nehmen die Unteransprüche bezug.

Bei der erfindungsgemäßen Kassettendichtung ist es vorgesehen, daß die Dichtlippe den Innenring im Bereich von einer Stirnfläche dichtend berührt, daß der Innenring einstückig ausgebildet und im Bereich von beiden axialen Enden mit durch eine plastische Umformung erzeugten radial nach außen vorstehenden Ringvorsprüngen versehen ist und daß der Außenring in axialer Richtung beiderseits durch in Umfangsrichtung beabstandete Abstandhalter aus polymerem Werkstoff begrenzt ist, die die Stirnflächen im Neuzustand der Kassettendichtung anliegend berühren. Hierbei ist von Vorteil, daß die Dichtlippe unmittelbar im Bereich des Flüssigkeitseintritts in der Kassettendichtung angeordnet ist. Durch die Ausgestaltung der Dichtlippe, die an der radial verlaufenden Stirnfläche des Ringvorsprunges angeordnet ist wird eine besonders gute Abdichtung sowie eine gute Rückförderwirkung in Richtung des abzudichtenden Raumes erzielt. Durch die einstückige Ausbildung des Innenringes mit den parallel zueinander angeordneten Ringvorsprüngen ist die Montage der Kassettendichtung vergleichsweise einfach vorzunehmen, wobei der teilearme Aufbau eine wirtschaftlich günstige Herstellbarkeit bedingt. Die Abstandhalter haben die Aufgabe, den Außenring in einer definierten axialen Lage innerhalb des Innenringes zu halten und dadurch die Montage zu vereinfachen.

Nach erfolgter Montage werden die die Stirnflächen berührenden Noppen während der bestimmungsgemäßen Verwendung abgeschert, so daß eine unmittelbare Berührung zwischen Innen- und Außenring nur im Bereich der Dichtlippe stattfindet.

Gemäß einer weiteren vorteilhaften Ausgestaltung ist es vorgesehen, daß der Außenring vollständig von polymerem Werkstoff umschlossen ist und daß der polymere Werkstoff die Abstandhalter die Dichtlippe und die Gehäuseabdichtung einstückig ineinander übergehend bildet. Die Herstellung des Außenringes sowie dessen Montage im Innenring ist durch diese Ausgestaltung besonders vereinfacht. Eine wirtschaftlich günstige Herstellbarkeit ist durch den einstückig ausgebildeten Außenring gewährleistet.

Die Abstandhalter können durch Positionierungsnoppen gebildet sein wobei die Positionierungsnoppen zumindest die selbe Ausdehnung in axialer Richtung aufweisen. Hierbei ist von Vorteil, daß die Positionierungsnoppen bei einer Relativbewegung zwischen Innen- und Außenring in Umfangsrichtung besonders leicht abscheren und die Dichtung schon kurz nach Beginn der bestimmungsgemäßen Verwendung ihre ausgezeichneten Betriebseigenschaften erhält.

Die Positionierungsnoppen jeweils einer axialen Seite können einer gedachten Rotationsachse der Welle in gleichem radialen Abstand zugeordnet sein wobei die Positionierungsnoppen auf der dem abzudichtenden Raum zugewandten Seite eine größere radiale Weite von der Rotationsachse aufweisen als die Positionierungsnoppen auf der dem abzudichtenden Raum abgewandten Seite. Durch den radialen Versatz der Positionierungsnoppen wird ein besonders verkantungsfreier Einbau der Kassettendichtung in die Bohrung gewährleistet. Dabei ist vorgesehen, daß die Positionierungsnoppen einen radialen Abstand voneinander aufweisen, der unter Berücksichtigung der konstruktiven Gegebenheiten so groß wie möglich ausfällt. Eine Beschädigung, insbesondere der Gehäuseabdichtung ist dadurch auf ein Minimum reduziert. Außerdem besteht ein weiterer Vorteil darin, daß die Kassettendichtung nicht nur am Innenring angreifend in die Bohrung eingeschoben werden kann, sondern, falls dies besondere Gegebenheiten des Anwendungsfalles erfordern, auch an jeder beliebigen anderen Stelle der radialen Stirnseite.

Zur Abdichtung zwischen der Welle und dem Innenring ist eine in radialer Richtung zwischen diesen Teilen angeordnete Dichtung vorgesehen, die flüssigkeitsdicht am Innenring festgelegt ist und in axialer Richtung zumindest zwei einander benachbarte Dichtbereiche aufweist, die während der bestimmungsgemäßen Verwendung der Kassettendichtung die Welle dichtend anliegend berühren. Darüberhinaus können die Dichtbereiche ein bogenförmiges Profil aufweisen. Bei dieser Dichtung handelt es sich um eine statische Abdichtung, da eine Relativbewegung in Umfangsrichtung zwischen dem Innenring und der Welle nicht stattfindet. Durch eine elastische Vorspannung der bogenförmigen Dichtbereiche und die daraus resultierenden Abplattungen dieser Bereiche an den Berührungsstellen mit der Welle ist eine zuverlässige Abdichtung jederzeit gewährleistet.

Eine besonders vorteilhafte Abdichtung des abzudichtenden Raumes und eine besonders gute Förderwirkung des abzudichtenden Mediums zurück in den abzudichtenden Raum weist die Dichtlippe auf, wenn sie im unmontierten Zustand in radialer Richtung nach außen aufgeweitete ist und mit der Rotationsachse einen Winkel einschließt, der 10 bis 60°, bevorzugt jedoch 20 bis 45° beträgt.

Eine weitere Verbesserung der Gebrauchseigenschaften wird bewirkt, wenn die Dichtlippe zumindest zwei in Richtung des abzudichtenden Raumes benachbarte Dichtkanten aufweist, wobei die Dichtkanten durch konvergierende Begrenzungsflächen einander benachbarter Dichtzähne gebildet sind. Darüberhinaus ist vorgesehen, daß die in Richtung des abzudichtenden Raumes hintereinander geschalteten Begrenzungsflächen mit der Stirnfläche einen größeren Winkel einschließen, als die damit konvergierenden Begrenzungsflächen. Hierbei ist von Vorteil, daß bei eventuellen Radialbewegungen der Welle eine Förderwirkung in Richtung des abzudichtenden Raumes trotzdem gewährleistet bleibt und das abzudichtende Medium nicht an den Dichtzähnen vorbei in den zu schützenden Raum gelangt.

Gemäß einer weiteren vorteilhaften Ausgestaltung kann die Dichtlippe in Richtung des abzudichtenden Raumes durch einen auf der Stirnfläche flächig aufliegenden Endabschnitt begrenzt sein. Die Kassettendichtung weist durch den vergleichsweise höher belasteten Endabschnitt und dessen flächige Berührung mit der Stirnfläche eine erheblich vergrößerte Gebrauchsdauer bei verbesserten Gebrauchseigenschaften auf. Durch diese Ausgestaltung ist die Flächenpressung im Bereich der Dichtlippe entlang der Stirnfläche annähernd gleich groß.

Eine weitere Verbesserung des Abdichtungsergebnisses ist zu erzielen, wenn die Dichtlippe in zumindest einem Teilbereich ihre Erstreckung eine nur in axialer Richtung flexible Armierung aus nicht fließendem Werkstoff umschließt. Relaxationserscheinungen der Dichtlippe, auch bei höheren Umgebungstemperaturen werden durch diese Maßnahme wirkungsvoll verhindert. Desweiteren weist eine flexible Armierung mit einer Nachgiebigkeit nur in axialer Richtung den Vorteil auf, daß bei Lageveränderungen des Gehäuses und/oder der Welle, beispielsweise durch Temperaturdehnungen, die gute Dichtwirkung erhalten bleibt.

Zusätzlich kann in der Kassettendichtung im Bereich der Dichtlippe, die aus elastischem Werkstoff besteht, eine Ringwendelfeder angeordnet sein, um Relaxationserscheinungen zu minimieren.

Der Gegenstand der vorliegenden Erfindung wird nachfolgend anhand der Zeichnungen weiter erläutert. Diese zeigen die zu berücksichtigenden Einzelkomponenten teilweise in schematischer Darstellung.

Fig. 1 zeigt die erfindungsgemäße Kassettendichtung, die in radialer Richtung in einer Bohrung zwischen einer Welle und einem Gehäuse angeordnet ist.

In Fig. 2 ist der Außenring als Einzelteil dargestellt.

Fig. 3 zeigt den Innenring, der während der bestimmungsgemäßen Verwendung der Kassettendichtung auf einer rotierenden Welle relativ unverdrehbar zu dieser angeordnet ist.

Fig. 4 zeigt eine Ausgestaltung der erfindungsgemäßen Kassettendichtung, ähnlich wie Fig. 1, jedoch mit einer im Bereich der Dichtlippe angeordneten Ringwendelfeder.

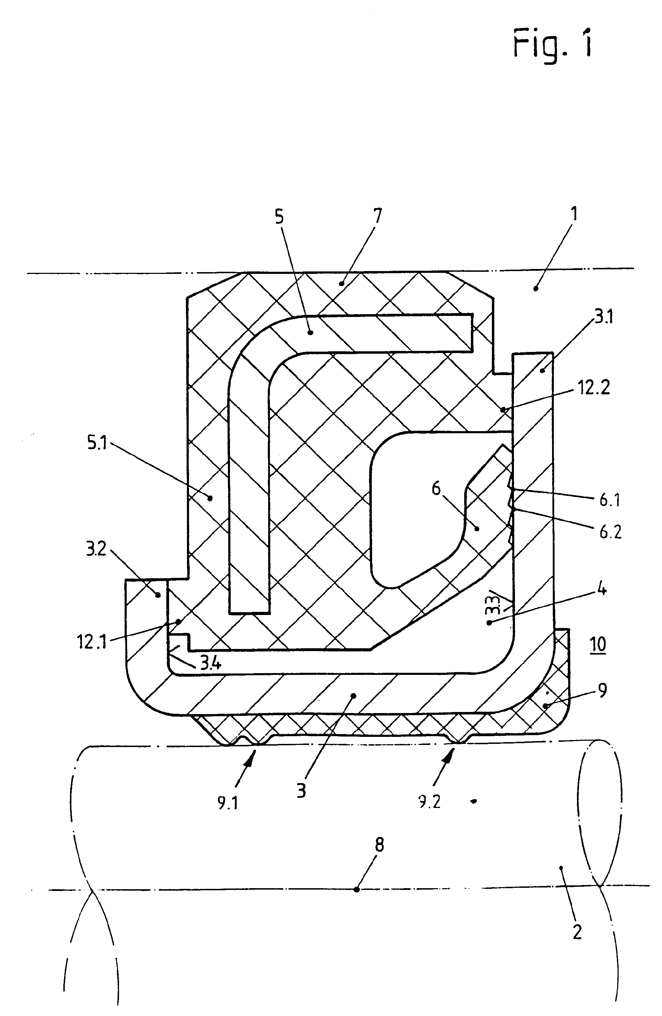

In Fig. 1 ist die erfindungsgemäße Kassettendichtung in einer Bohrung 1 angeordnet, und dichtet den Spalt zwischen einer Welle 2 und einem Gehäuse, die hier nur schematisch mit strichpunktierten Linien dargestellt sind, ab. Auf der Welle 2 ist ein Innenring 3 festgelegt wobei zwischen der Welle 2 und dem Innenring 3 in radialer Richtung eine Dichtung angeordnet ist, die flüssigkeitsdicht am Innenring 3 festgelegt ist. Die Dichtung 9 weist zumindest zwei einander in axialer Richtung benachbarte Dichtbereiche 9.1, 9.2 auf, die bogenförmig gestaltet sind und die Welle 2 während der bestimmungsgemäßen Verwendung der Kassettendichtung unter Vorspannung anliegend berühren. Die Vorspannung bewirkt eine elastische Abplattung der bogenförmigen Bereiche auf der Welle und somit eine zuverlässig statische Abdichtung an diesen Stellen. Der Innenring 3 ist einstückig ausgebildet und im Bereich von beiden axialen Enden mit radial nach außen vorstehenden Ringvorsprüngen 3.1, 3.2 versehen, die durch eine plastische Umformung erzeugt sind. Die radial nach außen vorstehenden Ringvorsprünge 3.1, 3.2 bilden die radial nach außen geöffnete Nut 4, in der der Außenring 5 aufgenommen ist. Der Außenring 5 ist in der Bohrung 1 aufgenommen und berührt die Gehäusewandung dichtend anliegend und relativ unverdrehbar. Die Dichtfläche des Außenringes kann verschiedenartig gestaltet sein und beispielsweise mehrere axial benachbarte und entlang des Umfangs verlaufende Dichtlippen aufweisen. Die Nut 4 ist in axialer Richtung durch einander zugewandte Stirnflächen 3.3, 3.4 begrenzt die Bestandteile der Ringvorsprünge 3.1, 3.2 bilden. Am Radialvorsprung 5.1 des Außenringes 5 ist eine Dichtlippe 6 aus polymerem Werkstoff festgelegt, die den Innenring 3 im Bereich der Stirnfläche 3.3, die dem abzudichtenden Raum 10 zugewandt ist, dichtend berührt. Die Dichtlippe 6 weist mehrere in Richtung des abzudichtenden Raumes 10 benachbarte Dichtkanten 6.1, 6.2, 6.3, 6.4 auf. Die Dichtkanten 6.1, 6.2, 6.3, 6.4 sind durch konvergierende Begrenzungsflächen 6.1.1, 6.1.2 einander benachbarter Dichtzähne gebildet, wobei die in Richtung des abzudichtenden Raumes 10 hintereinandergeschalteten Begrenzungsflächen 6.1.1 mit der Stirnfläche 3.3 einen größeren Winkel einschließen, als die damit konvergierenden Begrenzungsflächen 6.1.2. Bei eventuell auftretenden Radialauslenkungen der Welle 2 ist dadurch trotzdem eine Förderwirkung in Richtung des abzudichtenden Raumes 10 gewährleistet, ohne daß die Gefahr besteht, daß abzudichtendes Medium in den zu schützenden Raum gelangt. Im Hinblick auf eine annähernd gleichmäßige Flächenpressung und dadurch deutlich reduzierten Verschleiß der Dichtlippe 6, weist diese in Richtung des abzudichtenden Raumes 10 einen flächig auf der Stirnfläche aufliegenden Endabschnitt auf.

In diesem Beispiel ist es vorgesehen, daß der Innenring 3 aus einem plastisch verformten Blech besteht. Der Außenring 5 ist vollständig von polymerem Werkstoff umschlossen und weist in axialer Richtung beiderseits in Umfangsrichtung beabstandete Abstandhalter 12.1, 12.2,... aus polymerem Werkstoff auf, die einstückig mit der Gehäuseabdichtung 7 und der Dichtlippe 6 ausgebildet sind und die Stirnflächen 3.3, 3.4 im Neuzustand der Kassettendichtung anliegend berühren. Die Abstandhalter 12.1, 12.2, ... stellen eine einfache Montage und eine genaue Zuordnung von Innenring 3 und Außenring 5 in axialer Richtung während der bestimmungsgemäßen Verwendung der Kassettendichtung sicher. Die Abstandhalter scheren während der ersten Umdrehungen von Innenring 3 und/oder Außenring 5 ab, so daß sich diese beiden Teile anschließend nur im Bereich der Dichtlippe 6 berühren. Die Abstandhalter auf einer axialen Begrenzungsfläche des Außenringes, die in Umfangsrichtung beabstandet sind, können wie hier dargestellt, die Rotationsachse 8 mit gleichem Abstand, insgesamt konzentrisch umschließen oder in radialer Richtung einen geringen Versatz zur Rotationsachse aufweisen wodurch die Abscherung während der bestimmungsgemäßen Verwendung vereinfacht wird. Ein weiterer Vorteil der Anordnung der Abstandhalter ist darin zu sehen, daß diese an den jeweiligen axialen Begrenzungsflächen des Außenringes eine unterschiedliche radiale Weite zur Rotationsachse aufweisen. Die Montage der Kassettendichtung ist dadurch weiter vereinfacht und eine Beschädigung insbesondere der Gehäuseabdichtung ist aufgrund der zuverlässig verhinderten Kippbewegungen des Außenringes 5 nicht zu befürchten.

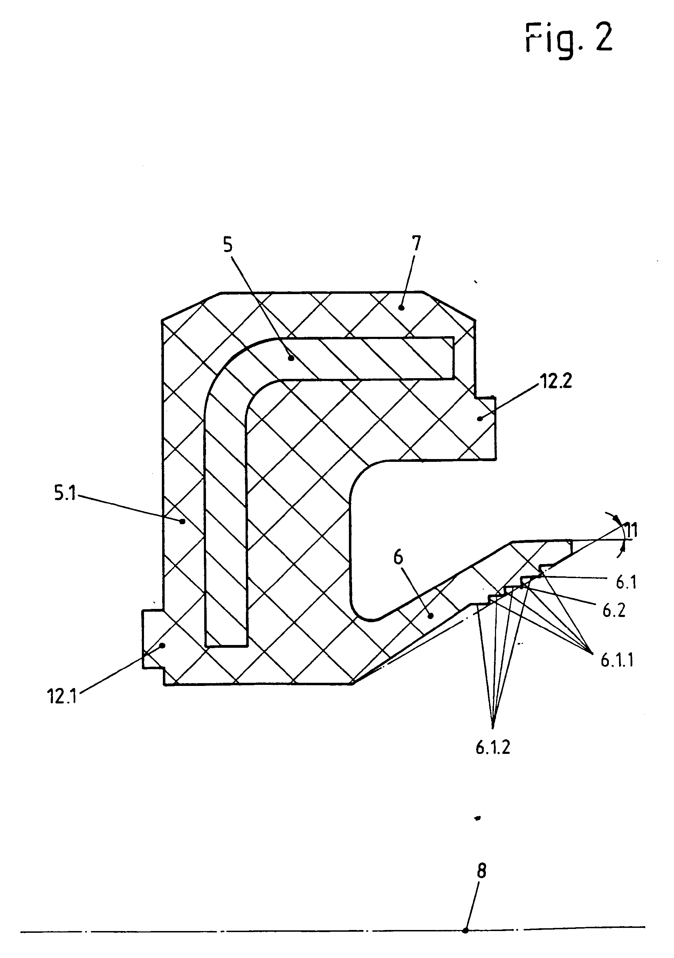

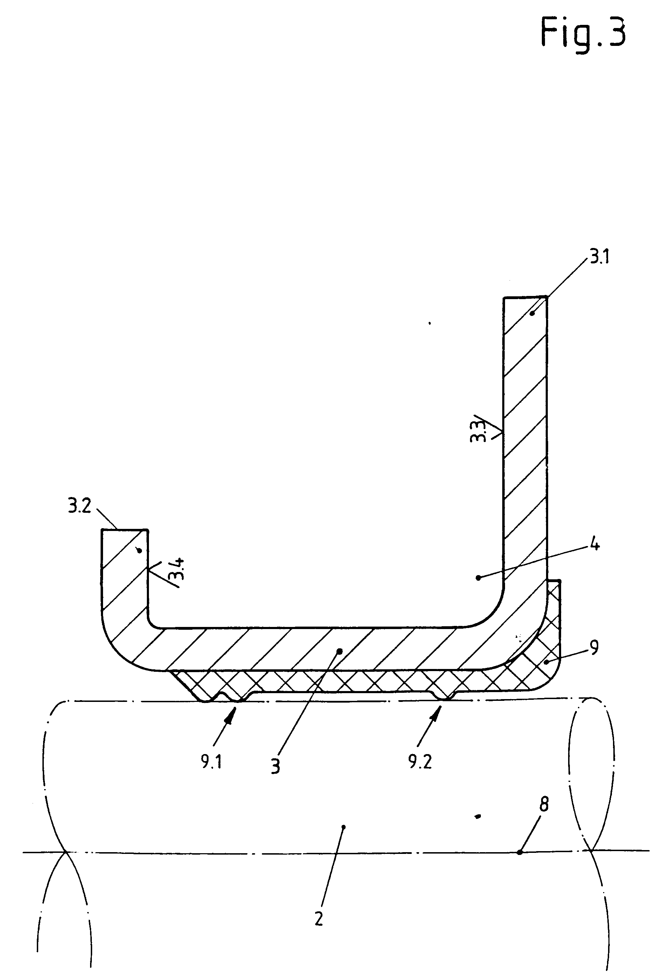

In Fig. 2 ist der Außenring 5 als Einzelteil dargestellt. Die Dichtlippe 6 schließt mit der Rotationsachse 8, dadurch daß Sie in radialer Richtung nach außen aufgeweitet ist, einen Winkel 11 ein, der bevorzugt 20 bis 45°, in diesem Beispiel 30° beträgt. In Abhängigkeit von dem Winkel 11 und einer bedarfsweise zumindest in einem Teilbereich der Erstreckung nur in axialer Richtung angeordneten flexiblen Armierung aus nicht fließendem Werkstoff, kann die Anpressung der Dichtlippe 6 an die Stirnfläche 3.3 des in Fig. 3 dargestellten Innenringes erfolgen.

In Fig. 3 ist der Innenring 3 aus der montierten Kassettendichtung gemäß Fig. 1 dargestellt, an dem die Dichtung 9 zur Abdichtung der Welle 2 flüssigkeitsdicht festgelegt ist. Der Innenring 3, der ein in radialer Richtung nach außen geöffnete Nut 4 begrenzt, weist auf den einander zugewandten Flächen der Ringvorsprünge 3.1, 3.2 parallele Stirnflächen 3.3, 3.4 auf, an denen die Abstandhalter 12.1., 12.2 .... des Außenringes 5 im Neuzustand der Kassettendichtung angelegt sind.

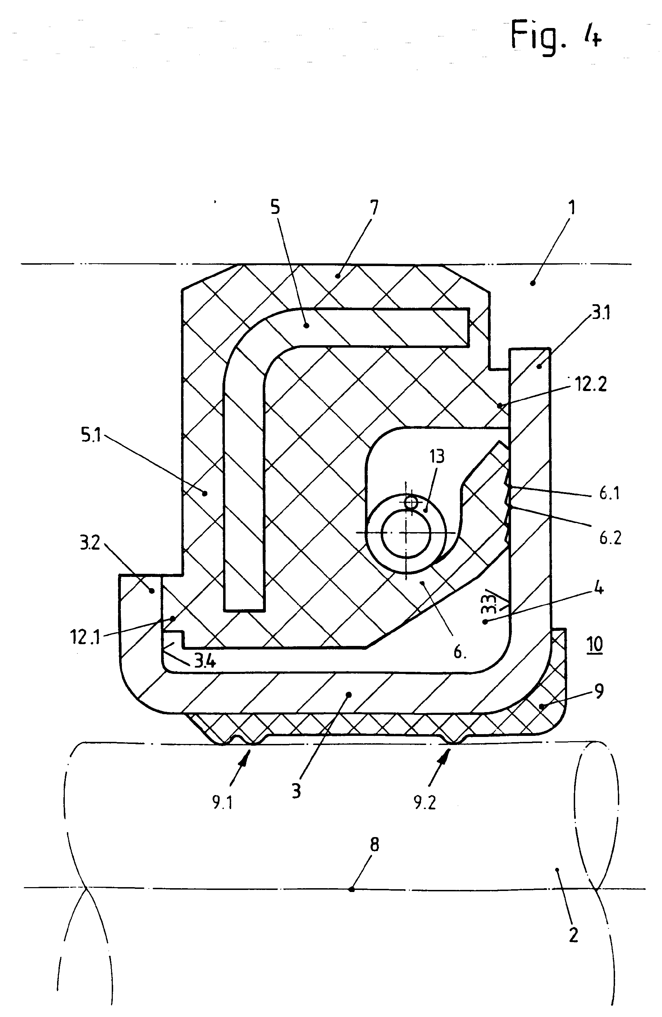

In Fig. 4 ist eine Kassettendichtung dargestellt, die im wesentlichen der Kassettendichtung aus Fig. 1 entspricht. Im Bereich der Dichtlippe 6 ist eine Ringwendelfeder 13 angeordnet, die eventuell auftretende Relaxationserscheinungen der Dichtlippe 6 während einer langen Gebrauchsdauer reduziert. Durch diese Ausgestaltung bleiben die guten Gebrauchseigenschaften der Kassettendichtung auch während einer langen Gebrauchsdauer erhalten. Die einfache Herstellbarkeit der Kassettendichtung wird durch die Anordnung der Ringwendelfeder 13 nicht nachteilig beeinflußt.

## Patentansprüche

1. Kassettendichtung zur Abdichtung des Spaltes zwischen einer Bohrung (1) und einer Welle (2), umfassend einen auf der Welle (2) festgelegten Innenring (3) mit einer radial nach außen geöffneten Nut (4), einen in der Bohrung (1) festgelegten Außenring (5) mit einem in die Nut (4) eingreifenden, flanschartig ausgebildeten Radialvorsprung (5.1), wobei der Innenring (3) mit in axialer Richtung einander zugewandten Stirnflächen (3.3, 3.4) versehen ist, die die Nut (4) in axialer Richtung begrenzen und eine im Bereich des Innenumfanges an dem Radalvorsprung (5.1) festgelegte Dichtlippe (6) aus polymerem Werkstoff, wobei zumindest der Innenring (3) aus einem plastisch verformten Blech besteht und wobei der Innenring (3) einstückig ausgebildet und im Bereich von beiden axialen Enden mit durch eine plastische Umformung erzeugten, radial nach außen vorstehenden Ringvorsprüngen (3.1, 3.2) versehen ist, dadurch gekennzeichnet, daß die Dichtlippe (6) den Innenring (3) im Bereich von einer Stirnfläche (3.3) dichtend berührt und daß der Außenring (5) in axialer Richtung beiderseits durch in Umfangsrichtung beabstandete Abstandhalter (12.1, 12.2) aus polymerem Werkstoff begrenzt ist, die die Stirnflächen (3.3, 3.4) im Neuzustand der Kassettendichtung anliegend berühren.

2. Kassettendichtung nach Anspruch 1, dadurch gekennzeichnet, daß der Außenring (5) vollständig von polymerem Werkstoffe umschlossen ist, und daß der polymere Werkstoff die Abstandhalter (12.1, 12.2,....), die Dichtlippe (6) und eine Gehäuseabdichtung (7) einstückig ineinander übergehend bildet.

3. Kassettendichtung nach Anspruch 1 bis 2, dadurch gekennzeichnet, daß die Abstandhalter (12.1, 12.2,....) durch Positionierungsnoppen gebildet sind und daß alle Positionierungsnoppen zumindest dieselbe Ausdehnung in axialer Richtung aufweisen.

4. Kassettendichtung nach Anspruch 3, dadurch gekennzeichnet, daß die Positionierungsnoppen jeweils einer axialen Seite eine gedachte Rotationsachse (8) der Welle (2) in gleichem radialen Abstand zugeordnet sind und daß die Positionierungsnoppen auf der dem abzudichtenden Raum (10) zugewandten Seite eine größere radiale Weite von der Rotationsachse (8) aufweisen, als die Positionierungsnoppen auf der dem abzudichtenden Raum (10) abgewandten Seite.

5. Kassettendichtung nach Anspruch 1 bis 4, dadurch gekennzeichnet, daß der Innenring (3) auf der der Welle (2) in radialer Richtung zugewandten Seite flüssigkeitsdicht mit einer Dichtung (9) verbunden ist und daß die Dichtung (9) in axialer Richtung zumindest zwei einander benachbarte Dichtbereiche (9.1, 9.2,...) aufweist, die während der bestimmungsgemäßen Verwendung der Kassettendichtung die Welle (2) dichtend anliegend berühren.

6. Kassettendichtung nach Anspruch 5, dadurch gekennzeichnet, daß die Dichtbereiche (9.1, 9.2,...) ein bogenförmiges Profil aufweisen.

7. Kassettendichtung nach Anspruch 1 bis 6, dadurch gekennzeichnet, daß die Dichtlippe (6) vor der Montage in den Innenring (3) in radialer Richtung nach außen aufgeweitet ist und mit der Rotationsachse (8) einen Winkel (11) einschließt, der 10 bis 60° beträgt.

8. Kassettendichtung nach Anspruch 7, dadurch gekennzeichnet, daß der Winkel (11) 20 bis 45° beträgt.

9. Kassettendichtung nach Anspruch 1 bis 8, dadurch gekennzeichnet, daß die Dichtlippe (6) zumindest zwei in Richtung des abzudichtenden Raumes (10) benachbarte Dichtkanten (6.1, 6.2,...) aufweist, daß die Dichtkanten (6.1, 6.2, ...) durch konvergierende Begrenzungsflächen (6.1.1, 6.1.2) einander benachbarter Dichtzähne gebildet sind und daß die in Richtung des abzudichtenden Raumes (10) hintereinander geschalteten Begrenzungsflächen (6.1.1) mit der Stirnfläche (3.3) einen größeren Winkel einschließen, als die damit konvergierenden Begrenzungsflächen (6.1.2).

10. Kassettendichtung nach Anspruch 9, dadurch gekennzeichnet, daß die Dichtlippe (6) in Richtung des abzudichtenden Raumes (10) durch einen auf der Stirnfläche (3.3) flächig aufliegenden Endabschnitt begrenzt ist.

11. Kassettendichtung nach Anspruch 1 bis 10, dadurch gekennzeichnet, daß die Dichtlippe (6) in zumindest einem Teilbereich ihre Erstreckung eine nur in axialer Richtung flexible Armierung aus nicht fließendem Werkstoff umschließt.

12. Kassettendichtung nach Anspruch 1 bis 11, dadurch gekennzeichnet, daß im Bereich der Dichtlippe (6) eine Ringwendelfeder (13) angeordnet ist.

## Claims

1. A cartridge seal for sealing off the gap between a bore (1) and a shaft (2), comprising an inner ring (3) which is fixed on the shaft (2) and has a groove (4) that is open radially outwards, an outer ring (5) which is fixed in the bore (1) and has a radial projection (5.1) of flange-like design which engages in the groove (4), the inner ring (3) being provided with end faces (3.3, 3.4) which face one another in the axial direction and bound the groove (4) in the axial direction, and a sealing lip (6) of polymer material which is fixed on the radial projection (5.1) in the region of the inside circumference, at least the inner ring (3) consisting of a plastically deformed metal sheet, and the inner ring (3) being of integral design and being provided in the region of both axial ends with radially outwardly protruding annular projections (3.1, 3.2) produced by plastic forming, characterized in that the sealing lip (6) touches the inner ring (3) in a sealing manner in the region of one end face (3.3), and in that the outer ring (5) is bounded on both sides in the axial direction by spacers (12.1, 12.2) of polymer material which are spaced apart in the circumferential direction and contact the end faces (3.3, 3.4) bearing against them in the new state of the cartridge seal.

2. A cartridge seal according to claim 1, characterized in that the outer ring (5) is completely surrounded by polymer material, and in that the polymer material forms the spacers (12.1, 12.2, ....), the sealing lip (6) and a housing seal (7), merging integrally into one another.

3. A cartridge seal according to either of claims 1 and 2, characterized in that the spacers (12.1, 12.2, ....) are formed by positioning knobs, and in that all the positioning knobs have at least the same extent in the axial direction.

4. A cartridge seal according to claim 3, characterized in that the positioning knobs in each case of one axial side are assigned to an imaginary axis of rotation (8) of the shaft (2) with equal radial spacing, and in that the positioning knobs on the side facing the space (10) to be sealed off have a greater radial width from the axis of rotation (8) than the positioning knobs on the side facing away from the space (10) to be sealed off.

5. A cartridge seal according to any of claims 1 to 4, characterized in that the inner ring (3) is connected in a fluid-tight manner to a seal (9) on the side facing the shaft (2) in the radial direction, and in that the seal (9) has in the axial direction at least two mutually adjacent sealing regions (9.1, 9.2, ...) which, during the intended use of the cartridge seal, touch the shaft (2) bearing against it in a sealing manner.

6. A cartridge seal according to claim 5, characterized in that the sealing regions (9.1, 9.2, ...) have a curved profile.

7. A cartridge seal according to any of claims 1 to 6, characterized in that the sealing lip (6) is widened outwards in the radial direction prior to assembly in the inner ring (3) and encloses an angle (11) from 10 to 60° with the axis of rotation (8).

8. A cartridge seal according to claim 7, characterized in that the angle (11) is from 20 to 45°.

9. A cartridge seal according to any of claims 1 to 8, characterized in that the sealing lip (6) has at least two sealing edges (6.1, 6.2, ...) which are adjacent in the direction of the space (10) to be sealed off, in that the sealing edges (6.1, 6.2, ...) are formed by converging boundary faces (6.1.1., 6.1.2) of mutually adjacent sealing teeth, and in that the boundary faces (6.1.1) disposed one after the other in the direction of the space (10) to be sealed off enclose a greater angle with the end face (3.3) than the boundary faces (6.1.2) converging therewith.

10. A cartridge seal according to claim 9, characterized in that, in the direction of the space (10) to be sealed off, the sealing lip (6) is bounded by an end section lying flatly on the end face (3.3).

11. A cartridge seal according to any of claims 1 to 10, characterized in that, in at least one partial region of its extent, the sealing lip (6) surrounds a reinforcement of non-flowing material which is flexible only in the axial direction.

12. A cartridge seal according to any of claims 1 to 11, characterized in that an annular helical spring (13) is arranged in the region of the sealing lip (6).

## Revendications

1. Joint en cartouche destiné à rendre étanche l'interstice entre un alésage (1) et un arbre (2), comprenant une bague intérieure (3) fixée sur l'arbre (2) avec une rainure (4) radialement ouverte vers l'extérieur, une bague extérieure (5) fixée dans l'alésage (1) avec une saillie radiale (5.1) conçue à la manière d'une bride, qui s'engrène dans la rainure (4), la bague intérieure (3) étant pourvue de faces (3.3, 3.4) placées en regard l'une par rapport à l'autre dans le sens axial, qui limitent la rainure (4) dans le sens axial, et comprenant une lèvre d'étanchéité (6) en matériau polymère, fixée sur la saillie radiale (5.1) dans la zone du périmètre intérieur, au moins la bague intérieure (3) étant en tôle déformée plastiquement et la bague intérieure (3) étant conçue en une pièce et étant munie au niveau des deux extrémités axiales de saillies annulaires (3.1, 3.2) obtenues par une déformation plastique, qui saillissent vers l'extérieur, caractérisé en ce que la lèvre d'étanchéité (6) touche la bague intérieure (3) de manière étanche au niveau d'une face (3.3) et en ce que la bague extérieure (5) est limitée dans le sens axial de part et d'autre par des entretoises (12.1, 12.2) en matériau polymère distancées dans le sens circonférentiel, lesquelles, à l'état neuf du joint en cartouche, adhèrent aux faces (3.3, 3.4).

2. Joint en cartouche selon la revendication 1, caractérisé en ce que la bague extérieure (5) est enveloppée entièrement de matériau polymère et en ce que le matériau polymère fait que les entretoises (12.1, 12.2, ...), la lèvre d'étanchéité (6) et un joint de boîtier (7) sont exécutés de manière à se fondre les uns dans les autres.

3. Joint en cartouche selon l'une des revendications 1 à 2, caractérisé en ce que les entretoises (12.1, 12.2, ...) sont formées par des boutons de positionnement et en ce que l'ensemble des boutons de positionnement ont au moins dans le sens axial la même extension.

4. Joint en cartouche selon la revendication 3, caractérisé en ce que les boutons de positionnement sont associés avec la même distance radiale à respectivement un côté axial d'un axe de révolution (8) imaginaire de l'arbre (2) et en ce que les boutons de positionnement présentent sur le côté orienté vers l'espace (10) à rendre étanche, une plus grande largeur radiale depuis l'axe de révolution (8) que les boutons de positionnement sur le côté opposé à l'espace (10) à rendre étanche.

5. Joint en cartouche selon l'une des revendications 1 à 4, caractérisé en ce que la bague intérieure (3), sur le côté orienté vers l'arbre (2) dans le sens radial, communique de manière étanche au liquide avec un joint (9) et en ce que le joint (9) comporte dans le sens axial au moins deux zones d'étanchéité (9.1, 9.2 ...) contiguës qui, au cours de l'utilisation prévue du joint en cartouche, touchent l'arbre de manière étanche.

6. Joint en cartouche selon la revendication 5, caractérisé en ce que les zones d'étanchéité (9.1, 9.2,...) présentent un profil en forme d'arc.

7. Joint en cartouche selon l'une des revendications 1 à 6, caractérisé en ce que la lèvre d'étanchéité (6), avant le montage dans la bague intérieure (3), est élargie dans le sens radial vers l'extérieur et enferme avec l'axe de révolution (8) un angle (11) compris entre 10 et 60°.

8. Joint en cartouche selon la revendication 7, caractérisé en ce que l'angle (11) est compris entre 20 et 45°.

9. Joint en cartouche selon l'une des revendications 1 à 8, caractérisé en ce que la lèvre d'étanchéité (6) comporte au moins deux arêtes étanches (6.1, 6.2, ...) contiguës dans le sens de l'espace (10) à rendre étanche, en ce que les arêtes étanches (6.1, 6.2, ...) sont formées par des surfaces de limitation (6.1.1, 6.1.2) convergentes de dents d'étanchéité contiguës et en ce que les surfaces de limitation (6.1.1) disposées l'une derrière l'autre en direction de l'espace (10) à rendre étanche, enferment avec la face (3.3) un plus grand angle que les surfaces de limitation convergentes (6.1.2).

10. Joint en cartouche selon la revendication 9, caractérisé en ce que la lèvre d'étanchéité (6) est limitée en direction de l'espace (10) à rendre étanche par un tronçon final reposant avec toute la surface sur la face (3.3).

11. Joint en cartouche selon l'une des revendications 1 à 10, caractérisé en ce que la lèvre d'étanchéité (6) enveloppe au moins dans une zone partielle de son extension une armature en matériau non coulant, qui est élastique dans le seul sens axial.

12. Joint en cartouche selon l'une des revendications 1 à 11, caractérisé en ce qu'au niveau de la lèvre d'étanchéité (6) est disposé un anneau-ressort hélicoïdal (13).
